# EUROPÄISCHE PATENTSCHRIFT

(11) **EP 1 791 009 B1**
(45) Veröffentlichungstag und Bekanntmachung des Hinweises auf die Patenterteilung: **29.04.2020**
(21) Anmeldenummer: 06016183.3
(22) Anmeldetag: 03.08.2006
(51) Int. Cl.: G02B 6/25

(54) **Verfahren zum Ablängen eines ummantelten Lichtwellenleiters**
Sheathed optical fibre cutting method
Procédé destiné à sectionner une fibre optique revêtue

(30) Priorität: 05.11.2005 DE 102005052808
(43) Veröffentlichungstag der Anmeldung: 30.05.2007
(73) Patentinhaber: Schäfer Werkzeug- und Sondermaschinenbau GmbH, 76669 Bad Schönborn (DE)
(72) Erfinder: Neubauer, Stefan, 67166 Otterstadt (DE)
(74) Vertreter: Hoffmann Eitle

(56) Entgegenhaltungen:
- EP-A2- 1 306 700
- WO-A-96/33430
- WO-A2-02/18193
- GB-A- 2 055 359
- US-A- 4 450 995
- US-A- 5 469 611
- US-A1- 2002 181 919

## Beschreibung

### Technisches Gebiet

Die Erfindung betrifft ein Verfahren zum Ablängen eines ummantelten Lichtwellenleiters mit einem Lichtleitkörper aus Glas sowie eine Vorrichtung zur Durchführung des Verfahrens.

### Stand der Technik

Ein Verfahren zun Ablängen eines ummantelten Lichtwellenleiters eine entsprechende Vorrichtung sind aus der US 4176909 bekannt. Dabei wird von einem Bündel Lichtwellenleiter zunächst eine das Bündel in seiner Gesamtheit umgebende Umhüllung entfernt und das Bündel anschließend mit Hilfe eines quer zu seiner Längsrichtung abwärts bewegten Messers abgetrennt, um einen Lichtwellenleiter zu erhalten, der eine dem speziellen Bedarf entsprechende Länge hat. Die beim schneidenden Ablängen erhaltenen Stirnflächen des Lichtwellenleiters sind jedoch derart uneben, dass eine Nachbearbeitung durch Überschleifen unverzichtbar ist, um die bei einer Signalübertragung über eine solche Stirnfläche erhaltene Signaldämpfung hinreichend niedrig zu halten. Diese Nachbearbeitung erfordert einen erheblichen Arbeitsaufwand und zusätzliche Kontrollen.

Ferner ist die EP 1 306 700 A2 bekannt, die eine Schneidvorrichtung für eine optische Faser beschreibt. Die Schneidvorrichtung umfasst einen beschichteten Abschnittshalter, einen unbeschichteten Abschnittshalter und einen Schneider. Eine ferromagnetische Substanz oder ein Magnet sind auf einer Oberfläche des unbeschichteten Abschnittshalters und einer Oberfläche des Schneidhalters angeordnet, die einander zugewandt sind. Eine ferromagnetische Substanz oder mehrere Magnete mit unterschiedlicher Magnetkraft sind mit gleichem Abstand auf dem unbeschichteten Profilhalter und dem Messerhalter angeordnet. Eine Spannung wird auf die optische Faser durch eine Abstoßungskraft ausgeübt, die zwischen einem Magneten, einem ersten Magneten und dem zweiten Magneten besteht. Die Spannung, die auf die optische Faser ausgewirkt wird, nimmt allmählich zu.

Ferner ist das Dokument US 4,450,995 A1 bekannt, die eine Maschine zum Ritzen optischer Fasern und ein entsprechendes Verfahren beschreibt. In der WO 96/33430 A werden zwei Paare von Klemmflächen beschrieben, die einen Abschnitt einer optischen Faser zwischen zwei Punkten halten.

### Darstellung der Erfindung

Der Erfindung liegt die Aufgabe zur Grunde, ein Verfahren und eine zu dessen Durchführung geeignete Vorrichtung zum Ablängen von Lichtwellenleitern aus Glas zu zeigen, bei dem Stirnflächen erhalten werden, die unter Vermeidung einer mechanischen Nachbearbeitung eine hinreichend niedrige Signaldämpfung bei der optischen Signalübertragung gewährleisten.

Diese Aufgabe wird erfindungsgemäß bei einem Verfahren der eingangs genannten Art mit den Merkmalen von Anspruch 1 sowie den Vorrichtungsmerkmalen von Anspruch 4 gelöst. Auf vorteilhafte Ausgestaltungen nehmen die jeweils darauf zurückbezogenen Unteransprüche Bezug.

Bei dem erfindungsgemäßen Verfahren wird ein Abschnitt des Lichtwellenleiters, der das abzulängende Ende umfasst, von dem ihn umschließenden Buffer und Jacket befreit und zwischen zwei Backenpaaren festgelegt, die in Längsrichtung des Lichtwellenleiters einen Abstand voneinander haben, sodann wird eine Schneide in dem durch den Abstand gebildeten Spalt und quer zur Längsrichtung des Lichtwellenleiters nur soweit in den Lichtleitkörper des Lichtwellenleiters gedrückt, dass sich an diesem eine plastische Minimaldeformierung an dem Ende ergibt und der Abstand der Backenpaare wird anschließend bis zum Zerreißen des Lichtwellenleiters an der Stelle des Endes vergrößert und der Lichtwellenleiter freigegeben und entnommen. Dabei geht die Erfindung aus von der Erkenntnis, dass sich das Glas des Lichtleitkörpers entgegen landläufiger Meinung durch eine Klinge so weitgehend plastisch deformieren lässt, dass der Lichtleitkörper an der zuvor plastisch deformierten Stelle beim nachträglichen Aufbringen einer Zugbelastung an genau dieser Stelle unter Bildung einer weitestgehend ebenen und ein Lichtsignal kaum dämpfenden Stirnfläche zerreißt. Bei der Verwendung eines solcher Art abgelängten Lichtwellenleiters bedarf es folglich keiner gesonderten Nachbearbeitung der Stirnflächen, um die erwünschte, niedrige Signaldämpfung zu erzielen. Hierbei ist es von besonderem Vorteil, dass sich das Verfahren sehr leicht automatisieren lässt und keine besonderen Nachkontrollen erfordert, um die vorgeschriebenen Qualitätsmerkmale zu erreichen. Das Verfahren lässt sich dadurch besonders kostengünstig anwenden. Es eignet sich insbesondere auch für das Ablängen von sehr dünnen Lichtwellenleitern aus Glas, beispielsweise von solchen, die einen Durchmesser von nur etwa 0,2 mm haben. Sie sind gewöhnlich von einem an dem Lichtleitkörper auch bei der Durchführung des erfindungemäßen Verfahrens verbleibenden Cladding umschlossen, welches aus Kunststoff besteht und nur eine Wandstärke von etwa 0,23 mm hat. Inbesondere derart dünne Lichtwellenleiter ließen sich bisher nur mit großem technischen Aufwand in der erforderlichen Qualität ablängen, was einer großtechnischen Anwendung bisher entgegengestanden hat.

Unter dem Lichtwellenleiter wird im Rahmen der vorliegenden Patentanmeldung zur Vereinfachung der Darstellung auch der nur von dem Cladding umschlossene Lichtleitkörper aus Glas verstanden.

Von großer Bedeutung ist es für das erfindungsgemäße Verfahren, dass die Schneide unter Vermeidung einer direkten oder indirekten Relativverdrehung des Lichtwellenleiters in den Lichtleitkörper eingedrückt wird. Die beim anschließenden Aufbringen einer Zugbeanspruchung parallel zur Längsrichtung des Lichtwellenleiters führt insbesondere zu Entstehung einer Stirnfläche an dem abgerissenen Ende, die sich senkrecht zu der Längsrichtung erstreckt. Für die Signalübertragung beim das Ankoppeln eines Lichtwellenleiters an eine Kupplung oder ein Gerät ist das von großem Vorteil.

Bei einer automatisierten Anwendung de erfindungsgemäßen Verfahrens sind zumindest die Arbeitsschritte: Festlegen des Lichtwellenleiters, Andrücken der Schneide, Abstandsvergrößerung der Backenpaare und Freigeben des Lichtwellenleiters prozessgesteuert verbunden. Die Durchführung lässt sich dadurch wesentlich beschleunigen und die Entstehung fehlerhaften Enden vermeiden.

Bei einer erfindungsgemäßen Vorrichtung sind die Backen der Backenpaare keilförmig in Richtung des Lichtwellenleiters geöffnet und diesen mit jeweils zumindest zwei Halteflächen an getrennten Umfangsstellen berühren. Dabei sind die Backenpaare durch jeweils zumindest zwei lamellenartig ineinander eingreigende Backen gebildet, die den Lichtwellenleiter jeweils an mehreren in Längsrichtung beabstandeten Klemmstellen zugleich festlegen. Zweckmäßig schließen die einander gegenüberliegenden Keilflächen mit einander einen Winkel von 5 bis 20° ein. Sie gewährleisten nach dem Anlegen an den vom Cladding umhüllten Lichtwellenleiter nicht nur einen in Längsrichtung unverrückbaren Sitz des Lichtwellenleiters, sondern auch, dass Relativverdrehungen zuverlässig vermieden werden. Diese könnten nämlich zur Entstehung von Stirnflächen führen, die der Längsrichtung schräg zugeordnet und nicht erwünscht sind.

Die Backen können durch die Kraft einer Spannfeder elastisch an den Lichtwellenleiter anpressbar sein. Unerwünscht große Deformierungen des Lichtwellenleiters oder gar ein Einschneiden der Schneide in dessen Außenumfang lassen sich dadurch besonders zuverlässig vermeiden.

Innerhalb der Backenpaare hat es sich als vorteilhaft bewährt, wenn der jeweils obere feststehend montiert und nur der jeweils untere in Richtung des oberen verschiebbar ist.

Die Schneide ist zweckmäßig durch zwei einander begrenzende Schrägflächen eines Messers gebildet, die miteinander einen Winkel von 5 bis 25° einschließen. Zweckmäßig besteht die Schneide aus Hartmetall oder einem anderen sehr harten Werkstoff. Sie ist vorteilhaft mehrere cm lang, was es erlaubt, die Schneide nach vorausgegangenem Verschleiß relativ in Querrichtung zu verschieben um eine unverschlissene Stelle zum Ablängen des Lichtwellenleiters im erfindungsgemäßen Sinne zu verwenden.

Die Schneide kann mit ihrer Bewegungsrichtung einen Winkel von 5 bis 25° einschließen, um das Cladding unter Vermeidung einer Relativverdrehung des Lichtwellenleiters leichter durchtrennen zu können.
Als vorteilhaft hat es sich bewährt, wenn die Schneide durch die Kraft einer Andrückfeder elastisch an den Lichtwellenleiter anpreßbar ist. Die Federkraft ist dabei so bemessen, dass das Cladding zuverlässig durchtrennt und der Lichtleitkörper in der erforderlichen Weise plastisch deformiert wird, ohne dass sich daran zu große Deformierungen oder gar ein Einschneiden ergibt.

### Kurzbeschreibung der Zeichnung

Eine beispielhafte Ausführung der Erfindung ist in den beiliegenden Zeichnungen dargestellt. Sie wird nachfolgend näher beschrieben. Es zeigen:
Fig. 1: Eine zur Durchführung des Verfahrens geeignete Vorrichtung in einer Ansicht von vorn.
Fig. 2: Die Vorrichtung nach Fig. 1 in einer Ansicht von der Seite.

### Ausführung der Erfindung

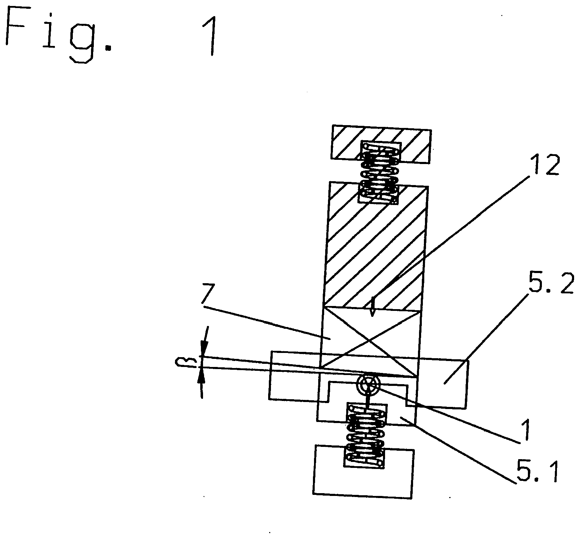

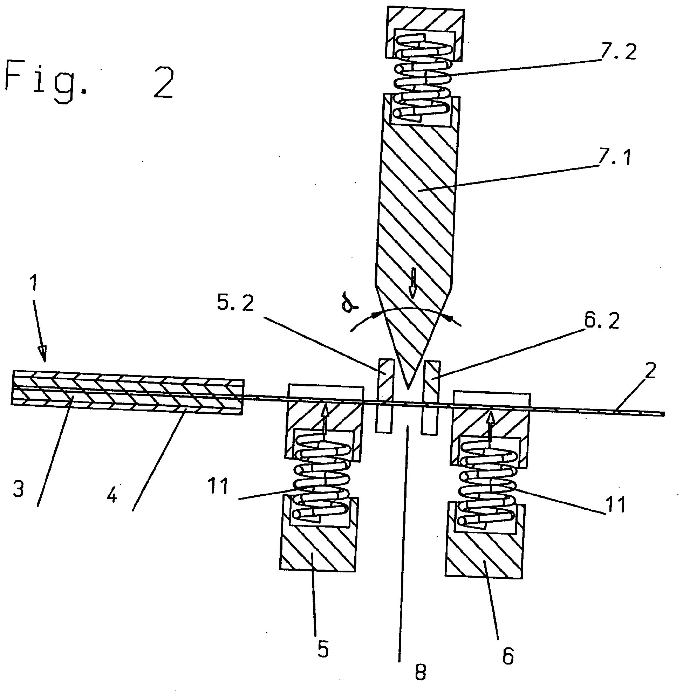

Fig. 1 zeigt eine zur Durchführung des erfindungsgemäßen Verfahrens geeignete Vorrichtung in einer Ansicht von vorn. Der von dem Jacket und dem Buffer befreite Lichtwellenleiter trägt noch das Cladding, das ihn unmittelbar umhüllt und das bei einer beispielhaften Dicke des Lichtwellenleiters von etwa 0,2 mm eine Wandstärke von etwa 0,23 mm aufweist. Ein Abschnitt des Lichtwellenleiters 1, der das abzulängende Ende umfasst, ist zwischen zwei Backenpaaren 5,6 (Fig. 2) festgelegt, die in Längsrichtung des Lichtwellenleiters (1) einen Abstand D voneinander haben. In den durch den Abstand D gebildeten Spalt 8, ist eine Schneide 7 eines Messers 7.1 quer zur Längsrichtung des Lichtwellenleiters eintauchbar und nur soweit in den Lichtleitkörper 2 eindrückbar, dass sich an diesem eine plastische Minimaldeformierung 9 an dem Ende ergibt. Anschließend wird der Abstand der Backenpaare 5, 6 bis zum Zerreißen des Lichtwellenleiters 1 an der Stelle der Minimaldeformierung 9 vergrößert und der Lichtwellenleiter 1 freigegeben und entnommen wird. Er ist unmittelbar verwendungsfähig und weist an der Stelle der Minimaldeformierung ein Ende auf, das sich quer zu seiner Längsrichtung erstreckt und das ohne weitere Nachbearbeitung eine weitgehend dämpfungsfreie Übertragung von Lichtsignalen zulässt. Vor besonderer Bedeutung ist es dafür, dass die Schneide unter Vermeidung einer Relativverdrehung des Lichtwellenleiters in den Lichtleitkörper eingedrückt wird. Sie darf daher ihrer Bewegungsrichtung nicht zu steil zugeordnet sein.

### Die Arbeitsschritte des Verfahrens:

Festlegen des Lichtwellenleiters 1, Andrücken der Schneide 7, Abstandsvergrößerung der Backenpaare 5, 6 und Freigeben des Lichtwellenleiters 1 sind zweckmäßig prozessgesteuert verbunden. Fehlbedienungen, die zu einem fehlerhaften Ende des abgetrennten Lichtwellenleiters führen könnten, werden dadurch ausgeschlossen.

Die Backenpaare sind dabei durch jeweils mehrere lammellenartig ineinander eingreifende Backen gebildet, die den Lichtwellenleiter an mehreren in Längsrichtung beabstandeten Klemmstellen festlegen, 4. Die Backen 5.1 können durch die Kraft von Spannfedern 11 elastisch an den Lichtwellenleiter 1 anpreßbar sein. Dadurch wird verhindert, dass sich durch eine große Anpressung unerwünschte Deformationen des Lichtleitkörpers im Bereich der Backenpaare 5, 6 ergeben.

Innerhalb der Backenpaare 5,6 ist der jeweils obere 5.2, 6.2 feststehend montiert und nur der jeweils untere 5.1 in Richtung des oberen verschiebbar.

Die Schneide 7 ist durch zwei einander begrenzende Schrägflächen eines Messers 7.1 gebildet, die einen Winkel α von 5 bis 25° miteinander einschließen.

Die Schneide schließt mit ihrer Bewegungsrichtung einen Winkel β von 5 bis 25° ein, Fig. 1.

Die Schneide ist durch die Kraft einer Andrückfeder 7.2 elastisch an den Lichtwellenleiter anpreßbar. Die Federrate der Andrückfeder 7.2 ist dabei so bemessen, dass sich gerade eine zum Abreißen des Lichtwellenleiters 1 ausreichende Minimaldeformierung 9-beim nachfolgenden Aufbringen einer Zugkraft auf den Lichtwellenleiter 1 mittels der Backenpaare 5, 6 ergibt, ohne dass die Dämpfungswirkung bei der Übertragung optischer Signale auf unzulässig große Werte ansteigt.

## Patentansprüche

1. Verfahren zum Ablängen eines ummantelten Lichtwellenleiters (1) mit einem Lichtleitkörper (2) aus Glas, wobei ein Abschnitt des Lichtwellenleiters (1), der das abzulängende Ende umfasst, von dem ihn umschließenden Buffer (3) und Jacket (4) befreit und zwischen zwei Backenpaaren (5,6) festgelegt wird, die in Längsrichtung des Lichtwellenleiters (1) einen Abstand voneinander haben, bei dem eine Schneide (7) in dem durch den Abstand gebildeten Spalt (8) und quer zur Längsrichtung des Lichtwellenleiters (1) nur soweit in den Lichtleitkörper (2) gedrückt wird, dass sich an diesem eine plastische Minimaldeformierung an dem Ende ergibt und bei dem der Abstand der Backenpaare (5,6) anschließend bis zum Zerreißen des Lichtwellenleiters (1) an der Stelle der Minimaldeformierung vergrößert und der Lichtwellenleiter (1) freigegeben und entnommen wird,
**dadurch gekennzeichnet, dass** die Backen (5.1, 5.2; 6.2) der Backenpaare (5,6) keilförmig in Richtung des Lichtwellenleiters (1) geöffnet sind und diesen mit jeweils zumindest zwei Halteflächen an getrennten Umfangsstellen berühren, und
die Backenpaare (5,6) durch jeweils zumindest zwei lammellenartig ineinander eingreifende Backen (5.1, 5.2; 6.2) gebildet sind, die den Lichtwellenleiter (1) an mehreren in Längsrichtung beabstandeten Klemmstellen festlegen.

2. Verfahren nach Anspruch 1, **dadurch gekennzeichnet, dass** die Schneide (7) unter Vermeidung einer Relativverdrehung des Lichtwellenleiters (1) in den Lichtleitkörper (2) eingedrückt wird.

3. Verfahren nach Anspruch 1 oder 2 **dadurch gekennzeichnet, dass** zumindest die Arbeitsschritte:
Festlegen des Lichtwellenleiters (1), Andrücken der Schneide (7), Abstandsvergrößerung der Backenpaare (5,6) und Freigeben des Lichtwellenleiters (1) prozessgesteuert verbunden sind.

4. Vorrichtung zur Durchführung des Verfahrens nach einem der Ansprüche 1 bis 3, wobei die Vorrichtung umfasst:
zwei Backenpaare (5,6), die in Längsrichtung des Lichtwellenleiters (1) einen Abstand voneinander haben,
eine Schneide (7), die in dem durch den Abstand der Backenpaare gebildeten Spalt und quer zur Längsrichtung des Lichtwellenleiters in den Lichtleitkörper (2) drückbar ist,
**dadurch gekennzeichnet, dass** die Backen (5.1, 5.2; 6.2) der Backenpaare (5,6) keilförmig in Richtung des Lichtwellenleiters (1) geöffnet sind und diesen mit jeweils zumindest zwei Halteflächen an getrennten Umfangsstellen berühren, und
die Backenpaare (5,6) durch jeweils zumindest zwei lammellenartig ineinander eingreifende Backen (5.1, 5.2; 6.1, 6.2) gebildet sind, die den Lichtwellenleiter (1) an mehreren in Längsrichtung beabstandeten Klemmstellen festlegen.

5. Vorrichtung nach Anspruch 4, **dadurch gekennzeichnet, dass** die Backen (5.1, 5.2; 6.2) durch die Kraft einer Spannfeder (11) elastisch an den Lichtwellenleiter (1) anpreßbar sind.

6. Vorrichtung nach einem der Ansprüche 4 bis 5, **dadurch gekennzeichnet, dass** innerhalb der Backenpaare (5, 6) der jeweils obere (5.2, 6.2) feststehend montiert und nur der jeweils untere (5.1) in Richtung des oberen verschiebbar ist.

7. Vorrichtung nach einem der Ansprüche 4 bis 6, **dadurch gekennzeichnet, dass** die Schneide (7) durch zwei einander begrenzende Schrägflächen eines Messers (7. 1) gebildet ist, die einen Winkel α von 5 bis 25° miteinander einschließen.

8. Vorrichtung nach einem der Ansprüche 4 bis 7, **dadurch gekennzeichnet, dass** die Schneide (7) mit ihrer Bewegungsrichtung (12) einen Winkel β von 5 bis 25° einschließt.

9. Vorrichtung nach einem der Ansprüche 4 bis 8, **dadurch gekennzeichnet, dass** die Schneide (7) durch die Kraft einer Andrückfeder (7.2) elastisch an den Lichtwellenleiter (1) anpreßbar ist.

## Claims

1. Method for cutting a sheathed optical fibre (1) having a light-conducting body (2) made of glass, wherein a section of the optical fibre (1) comprising the end which is to be cut is stripped of the buffer (3) and jacket (4) surrounding it and clamped between two pairs of jaws (5, 6) which are spaced at a distance apart in the longitudinal direction of the optical fibre (1), wherein a blade (7) is only pressed so far into the light-conducting body (2), in the gap (8) formed by the distance and transversely to the longitudinal direction of the optical fibre (1), that a minimal plastic deformation at the end results and wherein the distance between the pairs of jaws (5,6) is then increased until the optical fibre (1) ruptures at the point of the minimal deformation and the optical fibre (1) is released and removed,
**characterised in that** the jaws (5.1, 5.2; 6.2) of the pairs of jaws (5, 6) are opened in a V-shaped manner in the direction of the optical fibre (1) and touch this with in each case at least two gripping surfaces at separate points on the circumference, and
the pairs of jaws (5, 6) are formed by in each case at least two jaws (5.1, 5.2; 6.2) which engage together in an interlocking manner which clamp the optical fibre (1) at several clamping points which are spaced at a distance apart in the longitudinal direction.

2. Method according to claim 1, **characterised in that** the blade (7) is pressed into the light-conducting body (2) in such a way as to avoid a relative twisting of the optical fibre (1).

3. Method according to claim 1 or 2, **characterised in that** at least the working steps:
clamping the optical fibre (1), pressing the blade (7), increasing the distance between the pairs of jaws (5, 6) and releasing the optical fibre (1) are linked in a process-controlled manner.

4. Device for carrying out the method according to one of the claims 1 to 3, the device comprising:
two pairs of jaws (5, 6) which are spaced at a distance apart in the longitudinal direction of the optical fibre (1),
a blade (7) which can be pressed into the light-conducting body (2) in the gap formed by the distance between the pairs of jaws and transversely to the longitudinal direction of the optical fibre,
**characterised in that** the jaws (5.1, 5.2; 6.2) of the pairs of jaws (5, 6) are opened in a V-shaped manner in the direction of the optical fibre (1) and touch this with in each case at least two gripping surfaces at separate points on the circumference, and
the pairs of jaws (5, 6) are formed by in each case at least two jaws (5.1, 5.2; 6.1, 6.2) which engage together in an interlocking manner which clamp the optical fibre (1) at several clamping points which are spaced at a distance apart in the longitudinal direction.

5. Device according to claim 4, **characterised in that** the jaws (5.1, 5.2; 6.2) can be pressed elastically against the optical fibre (1) through the force of a tension spring (11).

6. Device according to one of the claims 4 to 5, **characterised in that**, within the pairs of jaws (5, 6), the respective upper jaw (5.2, 6.2) is mounted in a fixed manner and only the respective lower jaw (5.1) can be moved in the direction of the upper jaw.

7. Device according to one of the claims 4 to 6, **characterised in that** the blade (7) is formed by two adjacent angled surfaces of a knife (7.1) which enclose an angle α of 5 to 25°.

8. Device according to one of the claims 4 to 7, **characterised in that** the blade (7) encloses an angle β of 5 to 25° with its direction of movement (12).

9. Device according to one of the claims 4 to 8, **characterised in that** the blade (7) can be pressed elastically against the optical fibre (1) through the force of a contact pressure spring (7.2).

## Revendications

1. Procédé destiné à sectionner un câble à fibre optique gainé (1) avec un corps de fibre optique (2) en verre, dans lequel une section du câble à fibre optique (1), qui comprend l'extrémité à sectionner dans la longueur, est libérée de l'espace tampon (3) et de l'enveloppe (4) qui l'entourent et est bloquée entre deux paires de mâchoires (5, 6) qui présentent un écart entre elles dans la direction longitudinale du câble à fibre optique (1), dans lequel un tranchant (7) est enfoncé dans la fente (8) formée par l'écart et de manière transversale à la direction longitudinale du câble à fibre optique (1) seulement jusqu'à un point dans le corps de fibre optique (2) où celui-ci présente une déformation minimale plastique à son extrémité et dans lequel l'écart entre les paires de mâchoires (5,6) est augmenté subséquemment jusqu'à la déchirure du câble à fibre optique (1) au point de déformation minimale et le câble à fibre optique (1) est libéré et retiré,
**caractérisé en ce que** les mâchoires (5.1, 5.2 ; 6.2) des paires de mâchoires (5, 6) sont ouvertes de manière cunéiforme en direction du câble à fibre optique (1) et entrent en contact avec celui-ci avec respectivement au moins deux surfaces de retenue sur des points périphériques espacés, et
les paires de mâchoires (5, 6) sont formées par respectivement au moins deux mâchoires (5.1, 5.2; 6.2) en forme de lamelles venant en prise l'une dans l'autre, lesquelles bloquent le câble à fibre optique (1) au niveau de plusieurs points de serrage espacés dans la direction longitudinale.

2. Procédé selon la revendication 1, **caractérisé en ce que** le tranchant (7) est enfoncé dans le corps de fibre optique (2) tout en évitant une rotation relative du câble à fibre optique (1).

3. Procédé selon la revendication 1 ou 2 **caractérisé en ce qu'**au moins les étapes de travail suivantes :
blocage du câble à fibre optique (1), pressage du tranchant (7), augmentation de l'écart entre les paires de mâchoires (5,6) et libération du câble à fibre optique (1) sont reliées par commande de processus.

4. Dispositif de réalisation du procédé selon l'une quelconque des revendications 1 à 3, dans lequel le dispositif comprend :
deux paires de mâchoires (5, 6) qui présentent un écart entre elles dans la direction longitudinale du câble à fibre optique (1),
un tranchant (7) qui peut être enfoncé dans le corps de fibre optique (2) dans la fente formée par l'écart entre les paires de mâchoires et de manière transversale à la direction longitudinale du câble à fibre optique,
**caractérisé en ce que** les mâchoires (5.1, 5.2 ; 6.2) des paires de mâchoires (5, 6) sont ouvertes de manière cunéiforme en direction du câble à fibre optique (1) et entrent en contact avec celui-ci avec respectivement au moins deux surfaces de retenue sur des points périphériques espacés, et
les paires de mâchoires (5, 6) sont formées par respectivement au moins deux mâchoires (5.1, 5.2; 6.1, 6.2) en forme de lamelles venant en prise l'une dans l'autre, lesquelles bloquent le câble à fibre optique (1) au niveau de plusieurs points de serrage espacés dans la direction longitudinale.

5. Dispositif selon la revendication 4, **caractérisé en ce que** les mâchoires (5.1, 5.2 ; 6.2) peuvent être pressées élastiquement contre le câble à fibre optique (1) par la force d'un ressort de tension (11).

6. Dispositif selon l'une quelconque des revendications 4 à 5, **caractérisé en ce que** la mâchoire supérieure respective (5.2, 6.2) est montée de façon stationnaire à l'intérieur des paires de mâchoires (5, 6) et seule la mâchoire inférieure respective (5.1) peut être coulissée en direction de la supérieure.

7. Dispositif selon l'une quelconque des revendications 4 à 6, **caractérisé en ce que** le tranchant (7) est formé par deux surfaces biseautées adjacentes l'une à l'autre d'un couteau (7.1), lesquelles forment entre elles un angle α de 5 à 25 °.

8. Dispositif selon l'une quelconque des revendications 4 à 7, **caractérisé en ce que** le tranchant (7) forme un angle β de 5 à 25° avec sa direction de mouvement (12).

9. Dispositif selon l'une quelconque des revendications 4 à 8, **caractérisé en ce que** le tranchant (7) peut être pressé élastiquement contre le câble à fibre optique (1) par la force d'un ressort de pression (7.2).
